# EUROPEAN PATENT SPECIFICATION

(11) **EP 0 265 027 B1**
(45) Date of publication and mention of the grant of the patent: **31.03.1993**
(21) Application number: 87202034.2
(22) Date of filing: 22.10.1987
(51) Int. Cl.: C05F 3/00

(54) **Method for processing liquid manure**
Verfahren zur Verarbeitung von flüssigem Düngemittel
Procédé de traitement d'engrais liquide

(30) Priority: 23.10.1986 NL 8602652
(43) Date of publication of application: 27.04.1988
(73) Proprietor: Promest B.V., 5690 AA Son (NL)
(72) Inventor: Hilberts,Berend, NL-3831 CB Leusden (NL)
(74) Representative: Van kan, Johan Joseph Hubert, Ir.

(56) References cited:
- EP-A- 0 225 965
- DE-A- 3 036 370
- FR-A- 2 455 848

## Description

The invention relates to a method for processing liquid manure into on the one hand a solid, substantially consisting of organic materials and minerals and on the other hand a liquid, by carrying out an anaerobic purification of the liquid manure, whereby biogas is formed, and a finishing process.

The explosive growth of factory farming has created the problem of surplus manure. As a result topdressing takes place in those areas where surpluses exist, sometimes even leading to the dumping of manure. This affects the quality of the environment, whilst also the soil fertility is endangered. In order to tackle this problem a number of possibilities have been investigated, viz.:
- transport of manure from areas with surpluses to areas where manure is scarce,
- the processing of the manure on the farm and
- the processing of manure on an industrial scale.

In order to find a lasting solution for this problem especially this last possibility should be investigated. This method is complicated and only economically feasible when the matter is tackled on a large scale. Consequently a method as mentioned in the preamble has been developed within this framework. The purpose is finding a solution for the manure problem by processing animal manure into a high-grade organic manure in a way that is environmentally sensible and at the lowest possible cost.

The method mentioned in the preamble is known from the French patent application 2,455,848, which describes a method and device for fermenting manure consisting of solid and liquid components, said fermenting being carried out anaerobically for 10 - 20 days at a temperature of about 30 - 40°C. A biogas consisting of 70% methane on average and 30% carbon dioxide is developed thereby. The anaerobic fermentation of liquid manure is one of the possibilities for tackling the problem that can be applied, but it is insufficient for attaining an effluent which can be discharged into the surface water or into the sewer system. Therefore a total process has now been developed comprising several steps which are known by themselves, but with which in its entirety liquid manure can be processed into on the one hand a solid which can further be used economically and on the other hand a liquid with a content of harmful substances so low that said liquid can be discharged without any problems.

The British patent specification 1,492,396 discloses a method and device for processing animal manure whereby the mixture of solid and liquid components is first separated by means of a rotating vacuum filter and then the filtrate is heated to 110 - 120°C by means of a heat exchanger. In this manner a fertilizer suitable for the land and a filtrate which can be discharged can be obtained from the animal manure. The purpose of heating the filtrate is i.a. to kill the bacteria and other pathogenic micro-organisms. The composition of the liquid manure has become more complicated now, however, so that such a relatively simple method can no longer effectively be used for obtaining usable final products.

The indicated object is achieved with a method according to the invention which is characterized in that the fermented manure is mechanically separated into a cake and a filtrate, said filtrate being aerobically purified and concentrated.

This method is carried out in a factory consisting of several devices comprising the various parts which jointly constitute the process line aimed at. Said process line can be varied dependent on the composition of the liquid manure and the demands that are made of the final product. The most important parts are fermenting equipment, separating equipment, dryers of the manure cake, an aerobic purification plant and an evaporating plant.

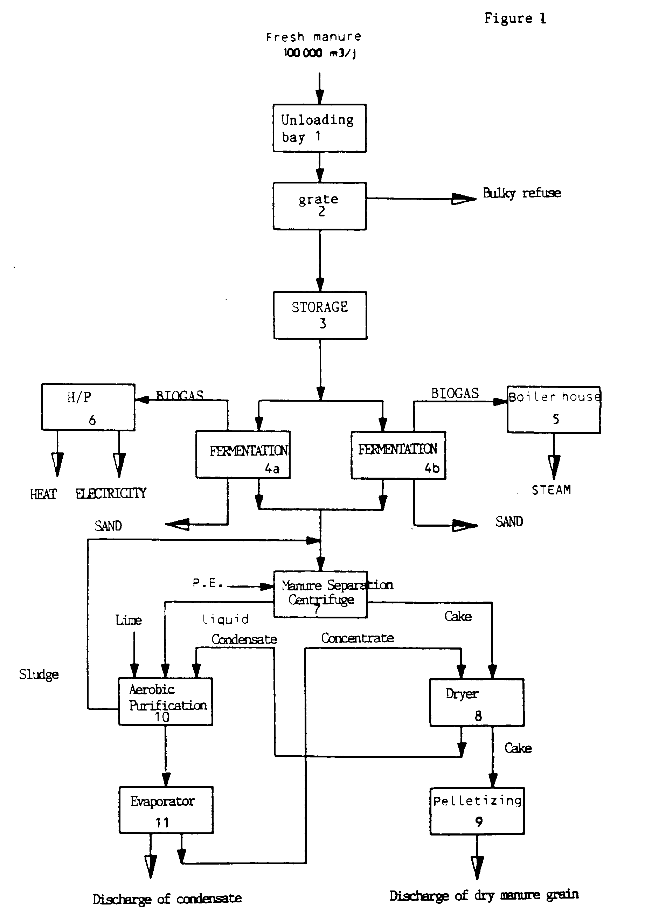

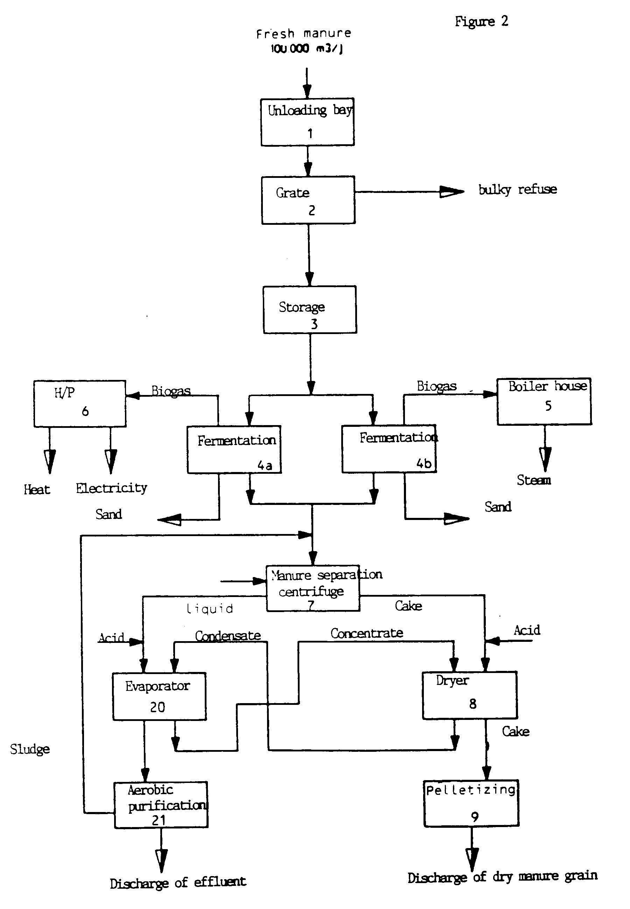

The invention will be further explained by means of the following description whereby reference is made to the appended drawing which illustrates in block diagram two embodiments of the process to be applied, fig 1 being a block diagram whereby after the mechanical separation first the aerobic purification is carried out and fig 2 illustrating a block diagram whereby after the mechanical separation first the evaporation takes place and then the aerobic purification.

According to a first diagram liquid manure containing 8% solid matter is supplied to an anaerobic purification or fermentation plant whereby biogas is formed. A great advantage of said fermentation is that a number of smell components are removed so that the nuisance caused by stench is reduced. From the fermenting process a fermented manure having a content of solid matter of about 6% is obtained, said fermented manure being mechanically separated. An advantage of the fermented manure is that the dehydrating properties are improved so that an easier separation into a cake and a filtrate can be obtained. The cake has a content of solid matter of about 30%. The filtrate from the mechanical separation is partially purified in an aerobic purification, use being made of an activated sludge. The mixture of filtrate - activated sludge and water is aerated. The filtrate, having a content of solid matter or dry matter of 1 - 2%, which is supplied to the aerobic purification is still insufficiently purified for being discharged directly. After the aerobic purification the organic material is nearly completely converted and the effluent only contains some organic matter, salts and ammonia, said effluent, possibly after acidification for binding the ammonia which is present, being concentrated or treated in another way in order to remove the anorganic and organic residue. The necessity of this last step depends i.a. on the liquid manure that is used and the composition of said liquid manure in its turn is mainly dependent on the feed supplied to the animals.

The aerobic purification is carried out such that a further decomposition of organic matter is obtained. The ages for the activated sludge which are used thereby are such that nitrifying micro-organisms can be kept alive. The nitrogen present in the filtrate is largely biochemically oxidated into nitrates and nitrites. During this biochemical process an acid is formed. The pH of the medium must be maintained at 7 during this process in order to prevent inhibition of the nitrification. Therefore it is preferred to add lime. An advantage of this treatment is that when the effluent is further processed it will not be necessary to add an acid in order to prevent the escape of ammonia on evaporation.

The block diagrams in the figures 1 and 2 will now be further explained. The difference between figure 1 and figure 2 can especially be seen in the exchange from the aerobic purification 10 and evaporator 11 to evaporator 20 and aerobic purification 21.

Those parts which are the same are indicated by the same reference numbers in the figures 1 and 2.

The installation represented in the figures 1 and 2 is intended for processing 100,000 m³ of manure per year. Said manure is brought in tank lorries to unloading bay 1, after which the manure is led across a grate in order to remove any coarse materials or bulky refuse. The manure, freed of bulky refuse, is then homogenized and stored in storage tank 3 for some days. Then the fermentation takes place via two separated lines having different manure fermenters, indicated by 4a and 4b in the drawing, which fermentation is also known as anaerobic purification. It is also possible, however, to carry out the fermentation in a single fermenter. As a result biogas is produced, which on the one hand can be converted into steam in the boiler house 5 and on the other hand heat and electricity can be obtained from this in the heat power unit 6. From the fermentation process also sand is obtained and discharged and the fermented manure is mechanically separated, preferably by means of a centrifuge 7. To aid the separation of the fermented manure into a liquid and a solid polyelectrolyt is supplied to the device 7 for the mechanical separation. After this mechanical separation two main currents arise, viz. on the one hand the liquid fraction which eventually results in an effluent to be discharged into the sewer or into the surface water and on the other hand a dry granular material. In order to obtain said dry material the cake from the fermented manure is supplied to a dryer 8 and the dried cake gets its final shape in a device 9 so that dry manure grains can be discharged. Said grains are suitable as a fertilizer by themselves or may serve, after possible further processing, as a cattle fodder. The liquid fraction from the centrifuged fermented manure on the other hand is further processed in an aerobic purification 10. In order to maintain the pH at a desired value of about 7 during the aerobic purification lime is added. In this aerobic purification any stench components are decomposed and a buffered nitrification takes place. The aerobic purification takes place by means of activated sludge with the addition of air. The surplus sludge is carried back to the fermented manure before the separation into the liquid and the solid phase takes place. To the aerobic purification there is also supplied the condensate obtained from the dryer 8. The liquid obtained from the aerobic purification plant 10 is supplied to an evaporator 11. The concentrate from said evaporator is supplied to the dryer 8 and the remaining liquid now contains so few impurities that this liquid can be discharged into the surface water. In this manner the liquid manure has on the one hand been processed into a dry, usable material and on the other hand into a liquid which can be discharged. During this process biogas has been obtained which can effectively be used as a source of energy in the present process. The solid components can easily be processed and form a usable final product.

The block diagram according to figure 2 largely corresponds with the block diagram of figure 1, whereby only the processing of the liquid material obtained from the mechanical separation of the fermented manure is carried out differently. The liquid obtained from centrifuge 7 is namely first supplied to evaporator 20. In order to prevent that ammonia escapes during the evaporation of said liquid an acid is added so that the ammonia is directly bound into ammonium salts. The liquid from the evaporator is supplied to the aerobic purification 21, which is the final step before the liquid is discharged into the sewer or into the surface water. The concentrate from the evaporator 20 is supplied to dryer 8.

Starting from 100,000 m³ of fresh manure 11,000 tons of granular product having a content of dry matter of about 90% are thus obtained. The composition of said dry matter is 50 - 60% of organic matter, 4 - 7% of nitrogenous components such as NO₃, 7 - 11% of calcium in the form of salts, 3 - 5% of phosphor calculated as P₂O₅ and 5 - 7% of potassium calculated as K₂O.

## Claims

1. Method for processing liquid manure into on the one hand a solid, substantially consisting of organic materials and minerals and on the other hand a liquid by carrying out an anaerobic purification of the liquid manure, whereby biogas is formed, and a finishing process, characterized in that the fermented manure is mechanically separated into a cake and a filtrate, said filtrate being aerobically purified and concentrated.

2. Method according to claim 1, characterized in that the aerobic purification is combined with a buffered nitrification for which buffering lime is supplied in order to maintain the pH at a value of about 7, after which the evaporation is carried out.

3. Method according to claim 2, characterized in that the mechanical separation is carried out after the anaerobic purification.

4. Method according to claims 1 - 3, characterized in that the mechanical purification implies a centrifugation process.

5. Method according to claim 1, characterized in that the filtrate is evaporated with the addition of an acid and the evaporated liquid obtained therefrom is subjected to an aerobic purification after which the liquid is discharged.

6. Method according to claims 1 - 5, characterized in that the separated cake, after centrifugation of the fermented manure, is dried and granulated or pelletized.

## Patentansprüche

1. Verfahren zur Aufbereitung von flüssiger Jauche zu einem Feststoff auf der einen Seite, im wesentlichen bestehend aus organischem Material und Mineralien, und einer Flüssigkeit auf der anderen Seite durch Ausführen einer anaeroben Reinigung der flüssigen Jauche, bei der Biogas gebildet wird, und einer Endbehandlung, **dadurch gekennzeichnet,** daß die fermentierte Jauche mechanisch in einen Kuchen und ein Filtrat getrennt wird, wobei das Filtrat aerobisch gereinigt und konzentriert wird.

2. Verfahren nach Anspruch 1, **dadurch gekennzeichnet,** daß die aerobe Reinigung kombiniert wird mit einer abgepufferten Nitrierung, wozu abgepufferter Kalk geliefert wird zum Aufrechterhalten eines pH-Werts von etwa 7, worauf die Verdampfung ausgeführt wird.

3. Verfahren nach Anspruch 2, **dadurch gekennzeichnet,** daß die mechanische Trennung nach der anaeroben Reinigung durchgeführt wird.

4. Verfahren nach einem der Ansprüche 1 bis 3, **dadurch gekennzeichnet,** daß die mechanische Trennung einen Zentrifugierungsprozeß einschließt.

5. Verfahren nach Anspruch 1, **dadurch gekennzeichnet,** daß das Filtrat mit Hilfe einer Säure verdampft wird und die dadurch erhaltene verdampfte Flüssigkeit einer aeroben Reinigung unterworfen wird, worauf die Flüssigkeit abgelassen wird.

6. Verfahren nach einem der Ansprüche 1 bis 5, **dadurch gekennzeichnet,** daß der abgetrennte Kuchen nach der Zentrifugierung der fermentierten Jauche getrocknet und granuliert oder pelletiert wird.

## Revendications

1. Méthode de traitement du purin pour obtenir d'une part un solide constitué essentiellement de matières organiques et de minéraux, et d'autre part un liquide, par une épuration anaérobie du purin donnant lieu à la formation d'un biogaz, et par un procédé de finition caractérisé par le fait que le purin fermenté est séparé mécaniquement en un gâteau et un filtrat, ledit filtrat étant épuré et concentré par une méthode aérobie.

2. Méthode selon la reventication 1, caractérisée par le fait que l'épuration aérobie est combinée à une nitrification tamponnée pour laquelle de la chaux tampon est fournie de manière à maintenir le pH à une valeur d'environ 7, après quoi a lieu l'évaporation.

3. Méthode selon la revendication 2, caractérisée par le fait que la séparation mécanique est effectuée après l'épuration anaérobie.

4. Méthode selon les revendications 1 - 3, caractérisée par le fait que l'épuration mécanique fait appel à un procédé centrifuge.

5. Méthode selon la revendication 1, caractérisée par le fait que le filtrat est évaporé avec l'addition d'un acide et que le liquide évaporé ainsi obtenu est soumis à une épuration aérobie après laquelle le liquide est évacué.

6. Méthode selon les revendications 1 - 5, caractérisée par le fait que le gâteau séparé, après centrifugation du purin fermenté, est séché et granulé ou nodulisé.
